# EUROPÄISCHE PATENTSCHRIFT

(11) **EP 1 782 876 B1**
(45) Veröffentlichungstag und Bekanntmachung des Hinweises auf die Patenterteilung: **02.01.2008**
(21) Anmeldenummer: 06119977.4
(22) Anmeldetag: 01.09.2006
(51) Int. Cl.: B01D 35/18, B01D 35/30

(54) **Filter-Wärmeübertrager-Kombination für Flüssigkeiten, insbesondere Schmieröl eines Kraftfahrzeug-Verbrennungsmotors**
Combination of filter and heat-exchanger for liquids, especially for the lubricant of an internal combustion engine of a vehicle
Ensemble filtre et échangeur de chaleur pour liquides, notamment pour lubrifiant d'un moteur à combustion interne d'un véhicule

(30) Priorität: 02.11.2005 DE 102005052163
(43) Veröffentlichungstag der Anmeldung: 09.05.2007
(73) Patentinhaber: Mahle International GmbH, 70376 Stuttgart (DE)
(72) Erfinder: Siefert, Daniel, 71336, Waiblingen (DE)
(74) Vertreter: Patentanwalts-Partnerschaft Rotermund + Pfusch + Bernhard

(56) Entgegenhaltungen:
- EP-A- 1 403 475
- EP-A1- 0 551 545
- EP-A1- 1 001 144
- DE-A1- 19 701 066
- GB-A- 2 163 967
- US-A- 5 575 329

## Beschreibung

Die Erfindung betrifft eine Filter-Wärmeübertrager-Kombination für Flüssigkeiten, insbesondere Schmieröl eines Kraftfahrzeug-Verbrennungsmotors, nach dem Oberbegriff des Patentanspruchs 1.

Aus der DE 10 2005 012 550 A1 ist eine Filter-Wärmeübertrager-Kombination für Flüssigkeiten bekannt, die unter anderem ein den Wärmeübertrager umfassendes Anschlusselement aufweist, welches aus zwei Teilen zusammengefügt wird, nämlich einem Ober- und einem Unterteil. Da sowohl das Oberteil als auch das Unterteil aus Metall hergestellt sind, kann eine Verbindung der einzelnen Teile untereinander oder mit dem Wärmeübertrager beispielsweise in einem gemeinsamen Lötprozess erfolgen, wodurch die Filter-Wärmeübertrager-Kombination wirtschaftlich hergestellt werden kann.

Die Erfindung beschäftigt sich mit dem Problem, die Herstellung einer solchen Filter-Wärmeübertrager-Kombination kostengünstiger zu gestalten. Darüber hinaus soll eine Kombination geschaffen werden, die hohen Anforderungen an die Maßhaltigkeit genügt und gleichzeitig einen hohen Grad an konstruktiver Freiheit erlaubt.

Dieses Problem wird erfindungsgemäß durch den Gegenstand des Anspruchs 1 gelöst.

Vorteilhafte Ausführungsformen sind Gegenstand der abhängigen Unteransprüche.

Die Erfindung beruht auf dem allgemeinen Gedanken, eine Filter-Wärmeübertrager-Kombination für Flüssigkeiten zu schaffen, bei welcher wesentliche Teile aus Kunststoff aufgebaut sind und zur Druckaufnahme über Zuganker miteinander beziehungsweise mit einer Grundplatte verbunden sind. Die Filter-Wärmeübertrager-Kombination weist eine Filtereinrichtung sowie eine damit über Kanäle verbundene Wärmeübertragereinrichtung auf, wobei zwischen der Filtereinrichtung und der Wärmeübertragereinrichtung eine Oberschale und eine Unterschale angeordnet sind. Die Oberschale ist dabei der Filtereinrichtung und die Unterschale der Wärmeübertragereinrichtung zugewandt. Da nach der erfindungsgemäßen Lösung die Ober- und die Unterschale aus Kunststoff ausgebildet sind, ist zwischen der Unterschale und der Wärmeübertragereinrichtung eine einen Bestandteil der Wärmeübertragereinrichtung bildende Grundplatte aus Metall angeordnet, auf der die Unterschale direkt aufliegt. Diese Grundplatte aus Metall dient einer Lastverteilung und stützt gleichzeitig die Unterschale vorzugsweise flächig ab. Die Oberschale, die Unterschale und die Grundplatte sind erfindungsgemäß über Zuganker gegeneinander verspannt. Die Zuganker bewirken durch die Verspannung der Oberschale gegen die Unterschale ein Abdichten der diese beide Schalen durchlaufenden Kanäle. Durch die Herstellung der Oberschale und der Unterschale aus Kunststoff können die Bauteilkosten gesenkt werden und gleichzeitig eine hohe konstruktive Freiheit erreicht werden. Darüber hinaus ist die Maßhaltigkeit derart hergestellter Bauteile aus Kunststoff sehr hoch.

Gemäß einer vorteilhaften Ausführungsform der erfindungsgemäßen Lösung ist vorgesehen, dass die Oberschale und die Unterschale unter Ausbildung und/oder unter Aufrechterhaltung dichter Kanäle miteinander verschweißt oder verklebt sind. Eine derartige Verschweißung beziehungsweise Verklebung macht Dichtungen zwischen den beiden Bauteilen entbehrlich. Die Schweiß- beziehungsweise Klebenaht ist dabei vorzugsweise derart ausgebildet, dass sie die üblichen, im Betrieb der Filter-Wärme-Übertrager-Kombination auftretenden Drücke aufnehmen kann und lediglich pulsierende Spitzenbelastungen von den Zugankern aufgenommen werden müssen. Um die Betriebssicherheit weiter zu steigern, ist es auch denkbar, zusätzlich eine äußere Schweißnaht, umlaufend an einer Berührungsfläche der beiden Schalen anzuordnen. Mit der Verklebung der Obermit der Unterschale lässt sich ebenfalls eine rationelle und damit kostengünstige Fertigung beziehungsweise Fügung erreichen.

Besonders günstig im Sinne der Erfindung lässt sich die Filter-Wärmeübertrager-Kombination herstellen, wenn die Oberschale und/oder die Unterschale im Spritzgussverfahren hergestellt sind. Hierbei wird in einem einzigen Arbeitsschritt in einem Spritzgusswerkzeug aus einer Formmasse ein vorzugsweise direkt gebrauchsfertiges Formteil sehr wirtschaftlich hergestellt, wobei eine Oberfläche der hergestellten Formteile der Werkzeuginnenfläche entspricht. Besonders hervorzuheben ist hierbei die hohe Maßhaltigkeit von im Spritzguss hergestellten Formteilen, sodass ein weiteres Nachbearbeiten zum Anbau anderweitiger Teile entfallen kann.

Bei einer weiteren vorteilhaften Ausgestaltung der erfindungsgemäßen Lösung sind an die Oberschale und/oder an die Unterschale Anbauteile oder Funktionsteile angespritzt. Denkbar sind hierbei beispielsweise Halter oder Kupplungsstücke. Durch die Spritzgusstechnik kann auch hier eine hohe konstruktive Freiheit erzielt werden bei gleichzeitig geringen Stückkosten, sofern die Stückzahl ein gewisses Maß erreicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Filter-Wärmeübertrager-Kombination in perspektivischer Darstellung von seitlich unten,
- Fig. 2: eine Darstellung wie in Fig. 1, jedoch von seitlich oben und ohne Oberteil eines Filtergehäuses,
- Fig. 3: eine Darstellung wie in Fig. 1, jedoch von seitlich oben und aus entgegengesetzter Richtung.

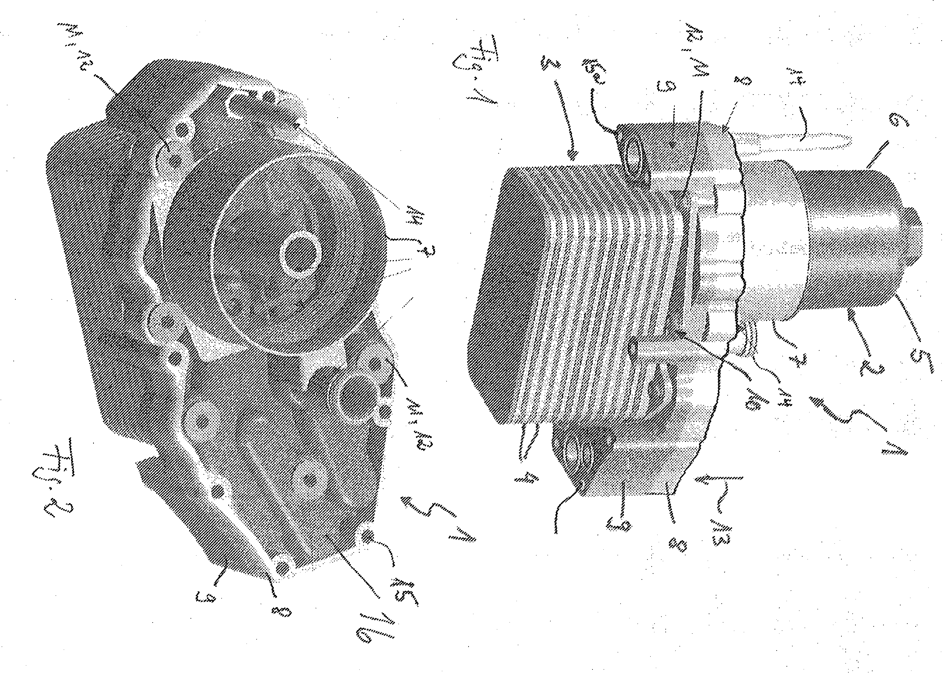

Entsprechend Fig. 1 weist eine Filter-Wärmeübertrager-Kombination 1 für Flüssigkeiten, insbesondere Schmieröl eines Kraftfahrzeug-Verbrennungsmotors, eine Filtereinrichtung 2 und eine Wärmeübertragereinrichtung 3 auf, welche über in Fig. 1 nicht sichtbare Kanäle miteinander verbunden sind. Die Wärmeübertragereinrichtung 3 kann gemäß einer bevorzugten Ausführungsform als Stapelwärmeübertrager ausgebildet sein, welcher aus aufeinander gestapelten und miteinander verbundenen, beispielsweise verlöteten, Metallscheiben 4 gebildet ist. Die Filtereinrichtung 2 besteht im wesentlichen aus einem teilbaren Filtergehäuse 5, das sich aus einem Oberteil 6 und einem damit vorzugsweise verschraubten Unterteil 7 sowie einem nicht sichtbaren, innen liegenden und austauschbaren Filterelement zusammensetzt. Zum Austausch des Filterelementes wird das Oberteil 6 vom Unterteil 7 abgeschraubt und anschließend abgezogen und dadurch das innenliegende Filterelement freigelegt. Günstigerweise ist dabei das Unterteil 7 ein einteiliger, das heißt aus einem Stück hergestellter, Bestandteil einer Oberschale 8, die wie eine Unterschale 9 zwischen der Filtereinrichtung 2 und der Wärmeübertragereinrichtung 3 angeordnet sind.

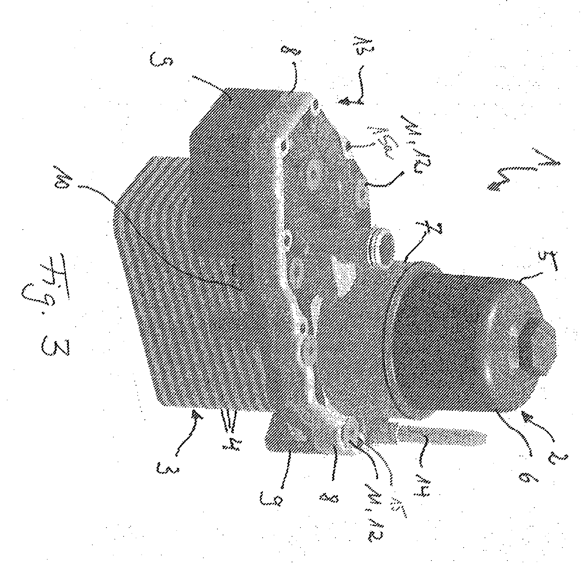

Wie in Fig. 1 bis Fig. 3 gezeigt, ist dabei die Oberschale 8 der Filtereinrichtung 2 und die Unterschale 9 der Wärmeübertragereinrichtung 3 zugeordnet.

Sowohl die Oberschale 8 als auch die Unterschale 9 sind gemäß der Erfindung aus Kunststoff ausgebildet und zumindest teilweise beziehungsweise bereichsweise von Kanälen durchlaufen. Die Ausbildung der Oberschale 8 an der Unterschale 9 aus Kunststoff bieten den Vorteil einer hohen konstruktiven Freiheit, eine hohe Maßhaltigkeit der beiden Schalen 8, 9 sowie geringe Fertigungskosten. Um die beispielsweise aus der Oberschale 8 und der Unterschale 9 zusammengesetzten Kanäle dicht zu halten, sind beide Schalen 8 und 9 miteinander verschweißt oder verklebt und zwar so, dass die beim normalen Betrieb der Filter-Wärmeübertrager-Kombination 1 auftretenden Drücke problemlos aufgenommen werden können. Von den Kanälen zwischen Ober- und Unterschale 8, 9 sind in Fig. 2 Außenwandkonturen 16 an der Oberfläche der Oberschale 8 erkennbar.

Um insbesondere pulsierende Spitzenbelastungen aufnehmen zu können sowie die beiden Schalen 8, 9 zusätzlich zu versteifen, werden diese zusammen mit einer Grundplatte 10 aus Metall, die Bestandteil des Wärmeübertragers 3 ist und direkt auf der Unterschale 9 aufliegt, gegeneinander verspannt. Dies erfolgt über Zuganker 11, welche sich beispielsweise durch fluchtende Öffnungen 15 der Oberschale 8, der Unterschale 9 und der Grundplatte 10 hindurch erstrecken und sich jeweils außerhalb der Öffnungen 15 von Ober- und Unterschale 8, 9 abstützen. Denkbar sind aber auch Zuganker 11, welche entweder einteilig mit der Grundplatte 10 oder der Oberschale 8 ausgebildet sind und sich dementsprechend entweder außerhalb der Oberschale 8 oder außerhalb der Grundplatte 10 abstützen. Darüber hinaus sind aber auch Zuganker 11 vorstellbar, die sich einenends an einer Außenseite der Oberschale 8 und anderenends an einer Außenseite der Grundplatte 10 abstützen und sowohl die Oberschale 8, die Unterschale 9 als auch die Grundplatte 10 außerhalb eines Umfangsrandes in der Art einer U-förmigen Klammer bzw. einer Schraubzwinge umgreifen.

Die Grundplatte 10 des Wärmeübertragers 3 verhindert im Betrieb der Filter-Wärmeübertrager-Kombination 1 ein Ausweichen beziehungsweise Aufbauchen der Unterschale 9 und gewährleistet dadurch die Dichtheit der zwischen den beiden Schalen 8 und 9 verlaufenden Kanäle bei besonders hohen Drücken und Temperaturen. Gleichzeitig dient die Grundplatte 10 als Verankerung der Zuganker 11, welche die Oberschale 8 gegen die Unterschale 9 vorspannen, wobei der Wärmeübertrager 3 über diese Grundplatte 10 mit Ober- und Unterschale 8, 9 verbunden ist. Dabei kann vorgesehen sein, dass die Zuganker 11 zur Befestigung Verschraubungsmittel enthalten oder mit solchen verbunden sind. Umfasst sein sollen von der Erfindung daher sowohl mehrteilige Verschraubungsmittel, wie beispielsweise Schrauben mit zugehörigen Muttern, als auch einteilige Verschraubungsmittel, welche beispielsweise in ein in die Grundplatte 10 eingebrachtes Innengewinde eingreifen. Zur besseren Lasteinleitung der Vorspannkräfte der Zuganker 11 in die Oberschale 8 können die Verschraubungsmittel beispielsweise als Schrauben mit einem Bundkopf beziehungsweise als Schrauben mit zugehörigen Bundhülsen ausgebildet sein, bei welchen eine auf einer dem Filtergehäuse 5 zugewandten Oberfläche der Oberschale 8 anliegende Auflagefläche als Bund ausgebildet ist. Im Fall der Ausbildung als Bundhülsen kann vorgesehen sein, dass diese auf der der Unterschale 9 abgewandten Seite der Oberschale 8 eingesteckt werden, wogegen ein Befestigungsmittel 12 in Form einer Schraube von der der Oberschale 8 abgewandten Seite der Unterschale 9 in die fluchtenden Öffnungen 15 der Grundplatte 10 eingesteckt und mit der Bundhülse verschraubt wird. Beim Anziehen der Zuganker 11 ist darauf zu achten, dass eine Vorspannkraft derselben unterhalb einer Kriechspannung des für die Oberschale 8 und/oder die Unterschale 9 verwandten Kunststoffes liegt. Dies ist insbesondere wichtig im Hinblick auf die Dichtheit der zwischen der Oberschale 8 und der Unterschale 9 verlaufenden Kanäle. Die Zuganker 11 wirken grundsätzlich wie "Nieten" mit jeweils außen an den Oberflächen der miteinander vernieteten Teile anliegenden Köpfen.

Zusätzlich zu den bereits beschriebenen Öffnungen 15 weisen die Oberschale 8 und die Unterschale 9 gemäß den Fig. 1 bis 3 weitere fluchtende Öffnungen 15a auf, die zur Aufnahme von nicht abgebildeten Befestigungsmitteln, beispielsweise Schrauben, ausgebildet sind, mit welchen die Filter-Wärmeübertrager-Kombinaton 1 an einer ebenfalls nicht dargestellten Brennkraftmaschine festlegbar ist. Dabei kann vorgesehen sein, dass die Brennkraftmaschine, beispielsweise ein Motorblock, eine zur Wärmeübertragereinrichtung 3 korrespondierende Öffnung aufweist, so dass bei an der Brennkraftmaschine montierter Filter-Wärmeübertrager-Kombination 1 die Wärmeübertragereinrichtung 3 in diese Öffnung hineinragt und damit platzsparend an der Brennkraftmaschine angeordnet werden kann. Für diesen Fall werden die Befestigungsmittel 12 durch die Öffnungen 15a in Pfeilrichtung 13 geführt und mit einem an der Brennkraftmaschine angebrachten Innengewinde in Eingriff gebracht. An der Ober- oder gegebenenfalls auch an der Unterschale 8; 9 liegen die Befestigungsmittel 12 jeweils zugankerartig von außen an.

Die Ausbildung sowohl der Oberschale 8 als auch der Unterschale 9 aus Kunststoff eröffnet darüber hinaus die Möglichkeit, an diese Anbau- oder Funktionsteile 14 anzuspritzen. Derartige Anbau- beziehungsweise Funktionsteile 14 können beispielsweise Halter- oder Kupplungselemente sein, welche beispielsweise eine Verbindung mit weiteren nicht dargestellten Teilen innerhalb eines Motorraums erlauben.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Filter-Wärmeübertrager-Kombination (1) für Flüssigkeiten, insbesondere Schmieröl eines Kraftfahrzeug-Verbrennungsmotors, mit einer Filtereinrichtung (2) und einer Wärmeübertragereinrichtung (3), welche über Kanäle miteinander verbunden sind,
**gekennzeichnet durch** die Merkmale,
- zwischen der Filtereinrichtung (2) und der Wärmeübertragereinrichtung (3) sind eine Oberschale (8) und eine Unterschale (9) angeordnet, wobei die Oberschale (8) der Filtereinrichtung (2) und die Unterschale (9) der Wärmeübertragereinrichtung (3) zugewandt ist,
- die Oberschale (8) und die Unterschale (9) sind aus Kunststoff ausgebildet,
- die Kanäle durchlaufen zumindest teilweise den Bereich zwischen Ober- und Unterschale (8, 9) und sind in diesem Bereich aus den beiden Schalen (8, 9) gebildet,
- zwischen der Unterschale (9) und der Wärmeübertragereinrichtung (3) ist eine Grundplatte (10) aus Metall als Bestandteil der Wärmeübertragereinrichtung (3) angeordnet, auf der die Unterschale (9) auf ihrer der Filtereinrichtung (2) abgewandten Seite direkt aufliegt,
- die Oberschale (8), die Unterschale (9) und die Grundplatte (10) sind über Zuganker (11) gegeneinander verspannt.

2. Filter-Wärmeübertrager-Kombination nach Anspruch 1,
**dadurch gekennzeichnet,**
**dass** die Oberschale (8), die Unterschale (9) und die Grundplatte (10) fluchtende Öffnungen (15) aufweisen, in die Zuganker (11) eingebracht sind, die sich jeweils außerhalb der Öffnungen von Ober- und Unterschale (8, 9) abstützen.

3. Filter-Wärmeübertrager-Kombination nach Anspruch 1 oder 2,
**dadurch gekennzeichnet,**
**dass** die Zuganker (11) zur Befestigung Verschraubungsmittel enthalten oder mit solchen verbunden sind.

4. Filter-Wärmeübertrager-Kombination nach einem der Ansprüche 1 bis 3,
**dadurch gekennzeichnet,**
**dass** die Oberschale (8) und die Unterschale (9) weitere fluchtende Öffnungen (15a) aufweisen, die zur Aufnahme von Befestigungsmitteln (12) ausgebildet sind, mit welchen die Filter-Wärmeübertrager-Kombination (1) an einer Brennkraftmaschine festlegbar ist.

5. Filter-Wärmeübertrager-Kombination nach einem der Ansprüche 1 bis 4,
**dadurch gekennzeichnet,**
**dass** die Oberschale (8) und/oder die Unterschale (9) im Spritzgussverfahren hergestellt sind.

6. Filter-Wärmeübertrager-Kombination nach einem der vorhergehenden Ansprüche,
**dadurch gekennzeichnet,**
**dass** an die Oberschale (8) und/oder die Unterschale (9) Anbauteile oder Funktionsteile (14) angespritzt sind.

7. Filter-Wärmeübertrager-Kombination nach Anspruch 6,
**dadurch gekennzeichnet,**
**dass** die Filter-Wärmeübertrager-Kombination (1) von einem teilbaren Filtergehäuse (5) mit einem Oberteil (6) und einem damit verschraubten Unterteil (7) sowie einem austauschbaren Filterelement das Unterteil (7) als einteiligem Bestandteil der Oberschale (8) aufweist.

8. Filter-Wärmeübertrager-Kombination nach einem der vorhergehenden Ansprüche,
**dadurch gekennzeichnet,**
**dass** der Wärmeübertrager (3) ein Stapelwärmeübertrager ist, der aus aufeinander gestapelten Metallscheiben (4) gebildet ist.

9. Filter-Wärmeübertrager-Kombination nach einem der vorhergehenden Ansprüche,
**dadurch gekennzeichnet,**
**dass** die Oberschale (8) und die Unterschale (9) unter Ausbildung und/oder Aufrechterhaltung dichter Kanäle miteinander verschweißt oder verklebt sind.

## Claims

1. A filter-heat exchanger combination (1) for liquids, in particular the lubricant oil of an automotive internal combustion engine, having a filter unit (2) and a heat transfer unit (3) which are connected by ducts,
**characterized by** the features
- a top shell (8) and a bottom shell (9) are arranged between the filter unit (2) and the heat transfer unit (3), whereby the top shell (8) is facing the filter unit (2) and the bottom shell (9) is facing the heat transfer unit (3),
- the top shell (8) and the bottom shell (9) are made of plastic,
- the ducts run at least partially through the area between the top shell and the bottom shell (8, 9) and are formed from the two shells (8, 9) in this area,
- a base plate (10) made of metal as part of the heat transfer unit (3) is arranged between the bottom shell (9) and the heat transfer unit (3), the bottom shell (9) resting directly on the base plate on the side facing away from the filter unit (2),
- the top shell (8), the bottom shell (9) and the base plate (10) are braced against one another by tie rods (11).

2. The filter-heat exchanger combination according to Claim 1,
**characterized in that**
top shell (8), the bottom shell (9) and the base plate (10) have aligned openings (15) into which tie rods (11) are inserted, each being supported by the top and bottom shells (8, 9) outside of the openings.

3. The filter-heat exchanger combination according to Claim 1 or 2,
**characterized in that**
the tie rods (11) contain or are joined to screw connection means for fastening.

4. The filter-heat exchanger combination according to any one of Claims 1 through 3,
**characterized in that**
the top shell (8) and the bottom shell (9) have additional aligned openings (15a), which are designed to receive fastening means (12) with which the filter-heat exchanger combination (1) can be secured on an internal combustion engine.

5. The filter-heat exchanger combination according to any one of Claims 1 through 4,
**characterized in that**
the top shell (8) and/or the bottom shell (9) are manufactured by the injection molding process.

6. The filter-heat exchanger combination according to any one of the preceding claims,
**characterized in that**
add-on parts or function parts (14) are integrally molded on the top shell (8) and/or the bottom shell (9).

7. The filter-heat exchanger combination according to Claim 6,
**characterized in that**
the filter-heat exchanger combination (1) of a divisible filter housing (5) with a top part (6) and a bottom part (7) connected to the former by screw connection as well as a replaceable filter element comprises the bottom part (7) as a one-piece component of the top shell (8).

8. The filter-heat exchanger combination according to any one of the preceding claims,
**characterized in that**
the heat exchanger (3) is a stacked heat exchanger formed from metal disks (4) stacked one above the other.

9. The filter-heat exchanger combination according to any one of the preceding claims,
**characterized in that**
the top shell (8) and the bottom shell (9) are welded or adhesively bonded to form and/or maintain tight ducts.

## Revendications

1. Ensemble filtre - échangeur de chaleur (1) destiné à des liquides, en particulier à de l'huile de lubrification d'un moteur à combustion interne de véhicule automobile, comprenant un dispositif de filtrage (2) et un dispositif de transfert thermique (3), lesquels sont reliés entre eux par l'intermédiaire de canaux, **caractérisé par** les caractéristiques,
- une coque supérieure (8) et une coque inférieure (9) sont disposées entre le dispositif de filtrage (2) et le dispositif de transfert thermique (3), la coque supérieure (8) étant tournée vers le dispositif de filtrage (2) et la coque inférieure (9) étant tournée vers le dispositif de transfert thermique (3),
- la coque supérieure (8) et la coque inférieure (9) sont réalisées en matière plastique,
- les canaux traversent au moins en partie la zone comprise entre la coque supérieure et la coque inférieure (8, 9) et sont formés dans cette zone des deux coques (8, 9),
- une plaque de base (10) en métal est disposée en tant que partie intégrante du dispositif de transfert thermique (3) entre la coque inférieure (9) et le dispositif de transfert thermique (3), plaque de base sur laquelle s'applique directement la coque inférieure (9) sur son côté opposé au dispositif de filtrage (2),
- la coque supérieure (8), la coque inférieure (9) et la plaque de base (10) sont serrées les unes par rapport aux autres par l'intermédiaire de tirants d'ancrage (11).

2. Ensemble filtre - échangeur de chaleur suivant la revendication 1, **caractérisé en ce que** la coque supérieure (8), la coque inférieure (9) et la plaque de base (10) comportent des ouvertures (15) en alignement, dans lesquelles sont introduits des tirants d'ancrage (11), qui s'appuient chacun à l'extérieur des ouvertures de la coque supérieure et de la coque inférieure (8, 9).

3. Ensemble filtre - échangeur de chaleur suivant l'une des revendications 1 et 2, **caractérisé en ce que** les tirants d'ancrage (11) comportent pour la fixation des moyens de vissage ou sont assemblés avec de tels moyens.

4. Ensemble filtre - échangeur de chaleur suivant l'une des revendications 1 à 3, **caractérisé en ce que** la coque supérieure (8) et la coque inférieure (9) comportent d'autres ouvertures (15a) en alignement, qui sont configurées pour recevoir des moyens de fixation (12), par lesquels l'ensemble filtre - échangeur de chaleur (1) peut être fixé sur un moteur à combustion interne.

5. Ensemble filtre - échangeur de chaleur suivant l'une des revendications 1 à 4, **caractérisé en ce que** la coque supérieure (8) et/ou la coque inférieure (9) sont fabriquées dans le procédé de moulage par injection.

6. Ensemble filtre - échangeur de chaleur suivant l'une des revendications précédentes, **caractérisé en ce que** des pièces rapportées ou éléments fonctionnels (14) sont injectés sur la coque supérieure (8) et/ou sur la coque inférieure (9).

7. Ensemble filtre - échangeur de chaleur suivant la revendication 6, **caractérisé en ce que** l'ensemble filtre - échangeur de chaleur, constitué d'un boîtier filtrant (5) partageable avec une partie supérieure (6) et une partie inférieure (7) vissée avec cette dernière, ainsi qu'avec un élément filtrant interchangeable, comporte la partie inférieure (7) en tant que composant monobloc de la coque supérieure (8).

8. Ensemble filtre - échangeur de chaleur suivant l'une des revendications précédentes, **caractérisé en ce que** l'échangeur de chaleur (3) est un échangeur de chaleur à plaques, formé de plaques métalliques (4) empilées les unes sur les autres.

9. Ensemble filtre - échangeur de chaleur suivant l'une des revendications précédentes, **caractérisé en ce que** la coque supérieure (8) et la coque inférieure (9) sont soudées ou collées entre elles en réalisant et/ou en maintenant des canaux étanches.
